# EUROPEAN PATENT SPECIFICATION

(11) **EP 1 627 933 B1**
(45) Date of publication and mention of the grant of the patent: **14.03.2007**
(21) Application number: 04425624.6
(22) Date of filing: 09.08.2004
(51) Int. Cl.: C22F 1/00, F03G 7/06

(54) **Method and device for adsorbing and/or desorbing hydrogen with the aid of shape memory materials**
Methode und Vorrichtung für die Adsoption und/oder Desorption von Wasserstoff mit Hilfe von Materialien mit Formgedächnis
Méthode et dispositif pour l'adsorption et/ou desorption d'hydrogene à l'aide de matérieux a mémoire de forme

(43) Date of publication of application: 22.02.2006
(73) Proprietor: C.R.F. SOCIETA' CONSORTILE PER AZIONI, 10043 Orbassano (Torino) (IT)
(72) Inventor: Perlo, Piero, 12048 Sommariva Bosco (Cuneo) (IT); Veca, Antonino, 10020 Casalborgone (Torino) (IT); Butera, Francesco, 10100 Torino (IT); Alacqua, Stefano, 10090 Rivoli Cascine Vica (Torino) (IT); Capretti, Gianluca, c/o C.R.F., 10043 Orbassano (Torino) (IT); Sgroi, Mauro, 10060 San Secondo di Pinerolo (Torino) (IT); Innocenti, Gianfranco, 10040 Rivalta (Torino) (IT)
(74) Representative: Notaro, Giancarlo

(56) References cited:
- EP-A- 0 526 647
- US-A- 4 576 639
- US-A- 5 360 461
- PATENT ABSTRACTS OF JAPAN vol. 0093, no. 01 (C-316), 28 November 1985 (1985-11-28) & JP 60 138028 A (MATSUSHITA DENKI SANGYO KK), 22 July 1985 (1985-07-22)

## Description

The present invention relates to methods and devices for reversible hydrogen adsorption and/or desorption. The invention is particularly directed to a device and a method according to the preambles of claims 1 and 11. A device of this type is known from EP-A-0 526 647.

According to the known art, hydrogen is stored on materials which are known for their ability to bond hydrogen by the formation of intermetallic compounds or through chemisorption and physisorption phenomena.

The aim of the present invention is to improve known methods and devices, in particular in order to improve their efficiency.

In view of achieving said aim, the object of the invention is a device according to claim 1 and a method according to claim 11.

The invention will now be described with reference to the accompanying drawings, provided as mere nonlimiting examples, in which:
- Figure 1 is a perspective view of an embodiment of a device according to the invention,
- Figure 2 is a magnified view of a detail of the adsorbing coating which is part of the device of Figure 1,
- Figure 3 is a further magnified view showing adsorbed H₂ molecules,
- Figures 4, 5 show the operating principle of the device according to the invention with reference to the deactivated condition of the shape-memory material and to the activated condition of the shape-memory material,
- Figures 6, 7 are a perspective view and a sectional view of a variant of the device of Figure 1,
- Figure 8 shows a further embodiment of the device in two different operating conditions,
- Figures 9, 10 are magnified views of details of the device of Figure 8 in the two different operating conditions, and
- Figure 11 shows a further variant in the two different operating conditions.

The basic idea underlying the present invention is to lay the material with adsorbing power towards hydrogen onto substrates of shape-memory material, so as to use said substrates for controlling and/or helping the adsorption and desorption phenomenon.

Shape recovery of the shape-memory material enables to control adsorption/desorption kinetics. As a matter of fact, shape variation in the shape-memory substrate onto which the materials with adsorbing power are laid, modifies the interstitial volume available for hydrogen: before activation of the shape-memory material, adsorbing materials have a certain packing degree and hydrogen molecules are trapped by steric effect and by electronic type interaction; as a result of the interaction of the shape-memory material, the reticular planes of the adsorbing materials get near one another and create less favorable conditions for hydrogen, which thus leaves the structure. The result thus obtained is a sort of "sponge" effect.

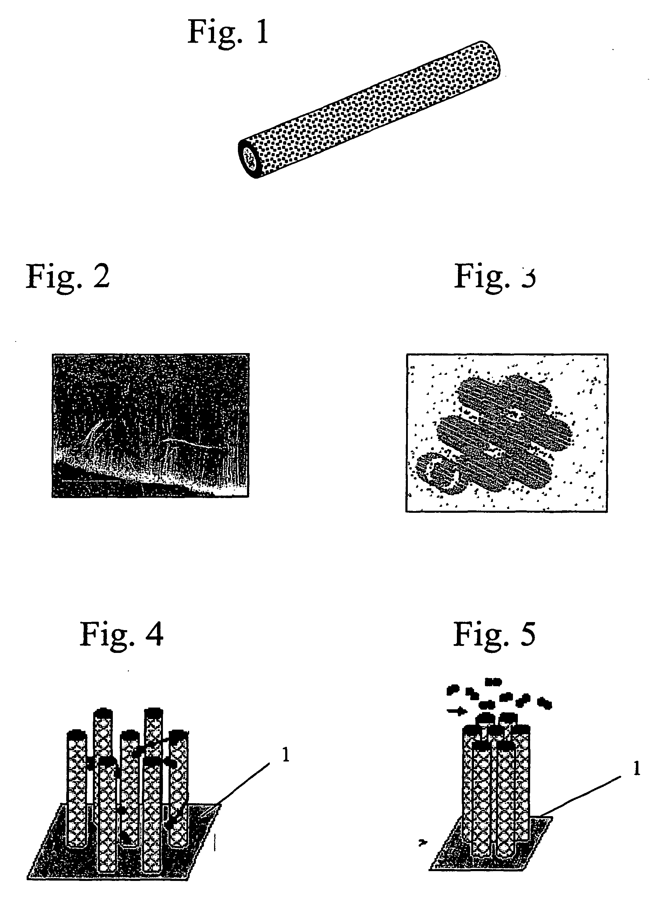

Figure 1 shows a first embodiment of the device, in which a support of shape-memory material, shaped as a bar with circular section, is provided with a coating of material with adsorbing power.

Figure 2 shows a detail of the adsorbing coating.

Figures 3 shows how H₂ molecules are stored in the adsorbing structure.

Figures 4 and 5 show the adsorbing structure as made of a series of parallel cylinders between which adsorbed H₂ molecules are arranged. The structure is laid onto a substrate 1 of shape-memory material.

Figure 5 shows the condition in which the shape-memory material has been activated, for instance by heating, so as to cause its transition from martensitic to austenitic phase in the case of shape-memory alloys. As a consequence of such phase variation, the reticular planes of the adsorbing materials get near one another, thus driving H₂ molecules outside.

Among adsorbing materials to be used the following can be mentioned: carbonaceous materials (e.g. carbon nanotubes, carbon nanofibers), metals (e.g. Li, Na, K, Mg or other alkali or alkali-earth metals of alanate type, Ti, Pd), metal alloys (e.g. NiTi, LaNi₅, FeTi, MgNi, LiB, MOF (Metal Organic Frameworks), small molecule or polymeric, organic or inorganic materials (e.g. polyanilines, polytetrafluoroethylene, polyamide, polyether ketone, polypropylene, polyvinylidene, polyethylene, polyvinyl chloride, polyimide, poly-aminoborane) or other materials with adsorbing power and combinations or hybrids thereof.

Among shape-memory materials to be used the following can be mentioned:
shape-memory-alloys:
   - Ni-based alloys, e.g.: Ni-Ti, Ni-Ti-Cu, Ni-Ti-Fe, Ni-Ti-Cr, Ni-Al;
   - Cu-based alloys, e.g.: Cu-Al-Ni, Cu-Zn-X (X= Si, Sn, Al), Cu-Zn, Cu-Sn;
   - magnetic alloys, e.g.: Ni-Mn-Ga;
   - high temperature alloys, e.g.: Ni-Ti-Hf;
   - other alloys, e.g.: Fe-Pt, Fe-Mn-Si, Mn-Cu, In-Ti, Ag-Cd, Au-Cd,
   or any other alloy having a different elementary composition and with a reversible thermoplastic martensitic transformation;
electrorestrictive and/or electrorestrictor polymers, e.g.:
   - silicones, fluorosilicones,
   - acrylic polymers,
   - PVDF (polyvinylidene fluoride), TrFe, HFP,
   shape-memory polymers, e.g.: polyurethane; electromechanically conducting polymers, e.g.: polyaniline;
piezoelectric materials:
   - ceramic materials, e.g.: PZT
   - single crystal materials, e.g.: PZN, PT
   - polymers, e.g.: PVDF-TrFe
   magnetorestrictive materials. Many metallic materials can adsorb high percentages of hydrogen, with subsequent size variations. Unfortunately, the materials that adsorb more hydrogen form highly stable hydrides: in order to release stored hydrogen, the adsorbing material should be heated at very high temperatures. That is why storage with these materials is not advantageous from an economic point of view. The advantage of the present invention consists in being able to use lower temperatures for hydrogen release thanks to the mechanical action performed by the shape-memory material. Moreover, desorption can be controlled in a precise manner by acting upon transformation development.

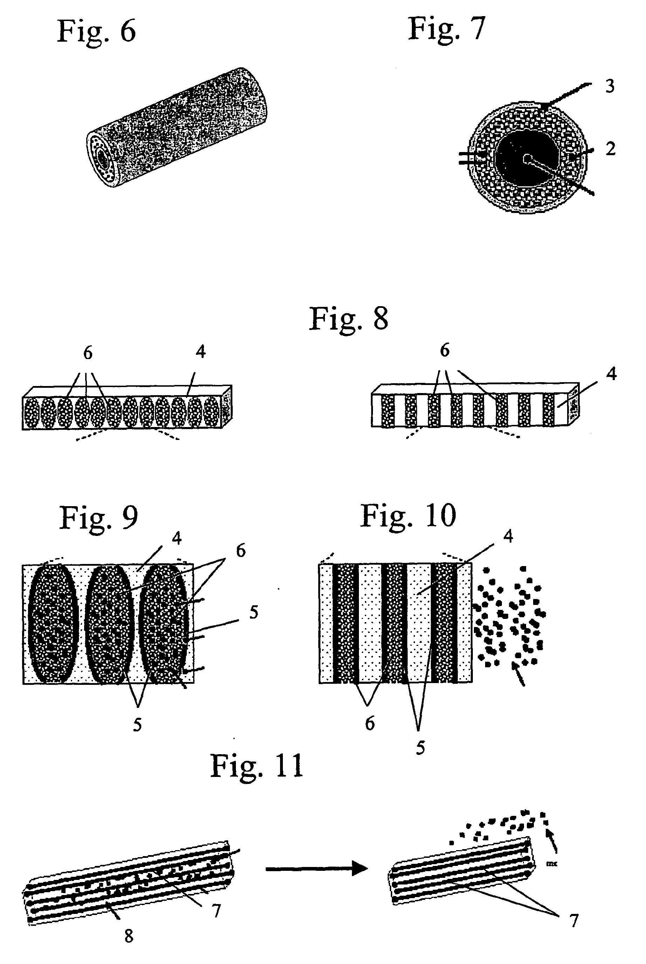

The adsorbing material can be covered in its turn with a layer of noble metal (Pd, Pt, etc.) having both storage and hydrogen catalytic dissociation functions, or with a layer of metallic or polymeric material acting as porous membrane, aiming at ensuring a better control of adsorption/desorption kinetics and also at containing the adsorbing material, thus eliminating the risk of its removal from the shape-memory support. Figures 6, 7 show an embodiment including a core shaped as a cylindrical bar, made of a shape-memory material and provided with a coating 2 of adsorbing material with particle or continuous structure, provided in its turn with an outer layer 3 controlling adsorption/desorption kinetics.

A further evolution of multi-layer structure consists in laying nanometric storage materials onto shape-memory microparticles (decoration): it is thus possible to optimize material surface/volume ratio, improving both alloy reactivity in the catalytic decomposition of hydrogen molecule and atomic hydrogen diffusion into the crystal lattice. "Decorated" shape-memory microparticles can be covered with a layer of palladium or other noble metal having a protective (it prevents alloy passivation with subsequent formation of oxides blocking hydrogen adsorption) and catalytic function.

A further geometric configuration consists in carrying out a stack of shape-memory plates alternated with layers of adsorbing material and immersed into a deformable polymeric matrix with kinetics control functions. Hydrogen molecules, if present, are stored inside the adsorbing material, which tends to deform its structure and to transmit said deformation to the shape-memory plates, which are free to deform because they are housed inside the elastic polymeric matrix. Upon activation, shape-memory plates recover their shape, contract and help the removal of hydrogen molecules. Said embodiment is shown in Figures 8-10. With particular reference to Figure 9 showing a detail of the structure with the non-activated shape-memory material, number 4 refers to the deformable polymeric matrix, whose function is to control adsorption/desorption kinetics. Plates 5 of shape-memory material are arranged inside the matrix 4, the layer 6 of adsorbing material being placed between said plates. Figure 10 shows the activated phase, the shape-memory plates 5 being contracted, thus helping the removal of H₂ molecules.

A further geometric configuration (Figure 11) consists in using threads of shape-memory material 7 immersed into the adsorbing material 8 and placed in various directions (linearly, grid-like, etc.). As a consequence of the activation of the shape-memory material, the whole structure contracts and hydrogen contained therein is removed (right-hand side in Figure 11). Here again a deformable polymeric matrix controlling adsorption/desorption kinetics can be used.

When adsorbing hydrogen, metallic materials form hydrides tending to get fragile and to break as the adsorption/desorption process develops. In order to increase the average life of such systems, a further configuration is proposed, in which the element of shape-memory material is covered with a single-molecule or polymeric or metal-organic hybrid, organic or inorganic layer with properties of hydrogen adsorption/desorption.

The conceived configuration combines the high fatigue life of shape-memory materials with the property of polymers in storing hydrogen without getting fragile, thus increasing system average life and resulting in a lower weight due to the lower specific weight of said system. Obviously, though the basic idea of the invention remains the same, construction details and embodiments can widely vary with respect to what has been described and shown by mere way of example, however without leaving the framework of the present invention.

## Claims

1. Device for both chemical and physical reversible hydrogen adsorption and/or desorption, comprising a material with adsorbing power towards hydrogen, wherein said organic or inorganic material is laid onto a substrate of shape-memory material whose phase variation is used to help hydrogen adsorption,
**characterized in that** said device includes means for causing a phase variation in the shape-memory material from a non-activated condition to a contracted activated condition, in such a way that the variation of the shape memory material from the non-activated condition to the contracted activated condition helps hydrogen desorption and the variation of the shape memory material from the contracted activated condition to the non-activated condition helps hydrogen adsorption, according to a sort of sponge effect.

2. Device according to claim 1, **characterized in that** the substrate of shape-memory material is shaped as a cylindrical bar covered with a coating including the aforesaid material with adsorbing power.

3. Device according to claim 1, **characterized in that** the adsorbing material is chosen among:
carbonaceous materials (e.g. carbon nanotubes, carbon nanofibers), metals (e.g. Li, Na, K, Mg or other alkali or alkali-earth metals of alanate type, Ti, Pd), metal alloys (e.g. NiTi, LaNi₅, FeTi, MgNi, LiB, MOF - Metal Organic Frameworks), or other materials with adsorbing power and combinations or hybrids thereof.

4. Device according to claim 1, **characterized in that** the adsorbing material is a small molecule or polymeric or metal-organic hybrid, organic or inorganic material.

5. Device according to claim 1, **characterized in that** the adsorbing material in the case of metal-organic hybrids (PDMH) is chosen among:
polymers, e.g.: polyanilines, polytetrafluoroethylene, polyamide, polyether ketone, polypropylene, polyvinylidene, polyethylene, polyvinyl chloride, polyimide, for the organic portion;
adsorbing metals are those mentioned in claim 3.

6. Device according to claim 1, **characterized in that** the shape-memory material is chosen among:
shape-memory-alloys:
- Ni-based alloys, e.g.: Ni-Ti, Ni-Ti-Cu, Ni-Ti-Fe, Ni-Ti-Cr, Ni-Al;
- Cu-based alloys, e.g.: Cu-Al-Ni, Cu-Zn-X (X= Si, Sn, Al), Cu-Zn, Cu-Sn;
- magnetic alloys, e.g.: Ni-Mn-Ga;
- high temperature alloys, e.g.: Ni-Ti-Hf;
- other alloys, e.g.: Fe-Pt, Fe-Mn-Si, Mn-Cu, In-Ti, Ag-Cd, Au-Cd,
or any other alloy having a different elementary composition and with a reversible thermoplastic martensitic transformation;
electrorestrictive and/or electrorestrictor polymers, e.g.:
- silicones, fluorosilicones,
- acrylic polymers,
- PVDF (polyvinylidene fluoride), TrFe, HFP,
shape-memory polymers, e.g.: polyurethane;
electromechanically conducting polymers, e.g.: polyaniline;
piezoelectric materials:
- ceramic materials, e.g.: PZT
- single crystal materials, e.g.: PZN, PT
- polymers, e.g.: PVDF
magnetorestrictive materials.

7. Device according to claim 2, **characterized in that** the coating of adsorbing material is provided in its turn with a layer of noble metal having both storage and hydrogen catalytic dissociation functions, or with a layer of metallic or polymeric material acting as porous membrane, aiming at ensuring a better control of adsorption/desorption kinetics and also at containing the adsorbing material, thus eliminating the risk of its removal from the shape-memory support.

8. Device according to claim 1, **characterized in that** the material with adsorbing power is laid in nanometric form onto shape-memory microparticles, preferably covered with a layer of palladium or other noble metal having a protective and catalytic function.

9. Device according to claim 1, **characterized in that** it comprises a stack of plates made of shape-memory material alternated with layers of adsorbing material and immersed into a deformable polymeric matrix controlling adsorption/desorption kinetics.

10. Device according to claim 1, **characterized in that** it comprises a plurality of threads of shape-memory material immersed into the adsorbing material and arranged in various directions, and if necessary a deformable polymeric matrix controlling adsorption/desorption kinetics.

11. Method for hydrogen adsorption and/or desorption, comprising the step of preparing a material with adsorbing power towards hydrogen, wherein said material is laid onto a substrate of shape-memory material whose phase variation is used to help hydrogen adsorption,
**characterized in that** a phase variation in the shape-memory material is caused, from a non-activated condition to a contracted activated condition, in such a way that the variation of the shape memory material from the non-activated condition to the contracted activated condition helps hydrogen desorption and the variation of the shape memory material from the contracted activated condition to the non-activated condition helps hydrogen adsorption, according to a sort of sponge effect.

## Patentansprüche

1. Vorrichtung für sowohl reversible chemische als auch reversible physikalische Adsorption und/oder Desorption von Wasserstoff, umfassend ein Material mit einer Wasserstoff adsorbierenden Kraft, wobei das organische oder anorganische Material auf ein Substrat aus Formgedächtnismaterial gelegt wird, dessen Phasenveränderung verwendet wird, um die Wasserstoffadsorption zu unterstützen,
**dadurch gekennzeichnet, dass** die Vorrichtung Mittel umfasst, um in dem Formgedächtnismaterial eine Phasenveränderung von einem nicht-aktivierten Zustand in einen zusammengezogenen aktivierten Zustand zu bewirken, auf solch eine Weise, dass die Veränderung des Formgedächtnismaterials von dem nicht-aktivierten Zustand in den zusammengezogenen aktivierten Zustand die Desorption von Wasserstoff unterstützt und dass die Veränderung des Formgedächtnismaterials von dem zusammengezogenen aktivierten Zustand in den nicht-aktivierten Zustand die Absorption von Wasserstoff unterstützt, sozusagen entsprechend einer Wirkung eines Schwamms.

2. Vorrichtung nach Anspruch 1, **dadurch gekennzeichnet, dass** das Substrat aus dem Formgedächtnismaterial als eine zylindrische Stange bzw. Barren geformt ist, bedeckt mit einer Beschichtung, welche das zuvor genannte Material mit absorbierender Kraft umfasst.

3. Vorrichtung nach Anspruch 1, **dadurch gekennzeichnet, dass** das absorbierende Material gewählt wird unter:
Kohlenstoffhaltigen Materialien (z.B. Kohlenstoffnanoröhren, Kohlenstoffnanofasern), Metallen (z.B. Li, Na, K, Mg oder andere Alkali- oder Erdalkalimetalle vom Alanatetyp, Ti, Pd), Metalllegierungen (z.B. NiTi, LaNi₅, FeTi, MgNi, LiB, MOFmetall-organische Frameworks) oder andere Materialien mit absorbierender Kraft und Kombinationen oder Hybride dieser.

4. Vorrichtung nach Anspruch 1, **dadurch gekennzeichnet, dass** das absorbierende Material ein Hybrid mit kleinem Molekül oder ein polymeres oder metall-organisches Hybrid, organisches oder anorganisches Material ist.

5. Vorrichtung nach Anspruch 1, **dadurch gekennzeichnet, dass** das absorbierende Material in dem Fall von metall-organischen Hybriden (PDMH) gewählt wird unter:
Polymeren, z.B.: Polyanilinen, Polytetrafluoroethylen, Polyamid, Polyetherketon, Polypropylen, Polyvinyliden, Polyethylen, Polyvinylchlorid, Polyimid, für den organischen Anteil;
adsorbierenden Metallen, wie die in Anspruch 3 genannten.

6. Vorrichtung nach Anspruch 1, **dadurch gekennzeichnet, dass** das Formgedächtnismaterial gewählt wird unter:
Formgedächtnislegierungen:
- auf Nickel basierende Legierungen, z.B.: Ni-Ti, Ni-Ti-Cu, Ni-Ti-Fe, Ni-Ti-Cr, Ni-Al;
- auf Cu basierende Legierungen, z,B.: Cu-Al-Ni, Cu-Zn-X (X = Si, Sn, Al), Cu-Zn, Cu-Sn;
- magnetische Legierungen, z.B.: Ni-Mn-Ga;
- Hochtemperaturlegierungen, z.B.: Ni-Ti-Hf;
- andere Legierungen, z.B.: Fe-Pt, Fe-Mn-Si, Mn-Cu, In-Ti, Ag-Cd, Au-Cd,
oder jede andere Legierung mit einer anderen elementaren Zusammensetzung und mit einer reversiblen thermoplastischen martensitischen Umwandlung;
elektrorestriktive Polymere und/oder Elektrorestriktorpolymere; z.B.:
- Silikone, Fluorosilikone,
- Akrylpolymere,
- PVDF (Polyvinylidenfluorid), TrFe, HFP,
Formgedächtnispolymere, z.B.: Polyurethan;
elektromechanisch leitende Polymere, z.B.: Polyanilin;
piezoelektische Materialien:
- keramische Materialien, z.B.: PZT
- Einkristallmaterialien, z.B.: PZN, PT
- Polymere, z.B.: PVDF
magnetorestriktive Materialien.

7. Vorrichtung nach Anspruch 2, **dadurch gekennzeichnet, dass** die Beschichtung aus dem absorbierenden Materials abwechselnd mit einer Schicht aus Edelmetall bereitgestellt wird, welche sowohl speichernde Funktion als auch katalytische Wasserstoffdissoziationsfunktion aufweist, oder mit einer Schicht aus metallischem oder polymerem Material, welches als eine poröse Membran wirkt, um eine bessere Steuerung der Adsorptions-/Desorptionskinetik sicherzustellen und um auch das absorbierende Material zu halten, wodurch das Risiko beseitigt wird, dass das Material von dem Formgedächtnisträger entfernt wird.

8. Vorrichtung nach Anspruch 1, **dadurch gekennzeichnet, dass** das Material mit der adsorbierenden Kraft in nanometrischer Form auf Formgedächtnismikropartikel aufgebracht wird, vorzugsweise versehen mit einer Schicht aus Palladium oder anderem Edelmetall, welche eine schützende und katalytische Funktion aufweist.

9. Vorrichtung nach Anspruch 1, **dadurch gekennzeichnet, dass** die Vorrichtung einen Stapel an Platten umfasst, bestehend aus Formgedächtnismaterial, welche sich mit Schichten aus absorbierendem Material abwechseln und eingetaucht in eine deformierbare polymere Matrix mit steuernder Absorptions-/Desorptionskinetik.

10. Vorrichtung nach Anspruch 1, **dadurch gekennzeichnet, dass** die Vorrichtung eine Vielzahl von Fasern aus Formgedächtnismaterial umfasst, eingetaucht in das absorbierende Material und angeordnet in verschiedenen Richtungen, und sofern notwendig eine deformierbare polymere Matrix, welche die Absorptions-/Desorptionskinetik steuert.

11. Verfahren zur Absorption und/oder Desorption von Wasserstoff, umfassend die Schritte des Herstellens eines Materials mit Wasserstoff absorbierenden Kraft, wobei das Material auf ein Substrat aus Formgedächtnismaterial aufgebracht wird, dessen Phasenveränderung verwendet wird, um die Absorption von Wasserstoff zu unterstützen,
**dadurch gekennzeichnet, dass** eine Phasenveränderung in dem Formgedächtnismaterial von einem nicht-aktivierten Zustand in einen zusammengezogenen aktivierten Zustand, auf solch eine Weise bewirkt wird, dass die Veränderung des Formgedächtnismaterials aus dem nicht-aktivierten Zustand in den zusammengezogenen aktivierten Zustand die Desorption von Wasserstoff unterstützt und die Veränderung des Formgedächtnismaterials von dem zusammengezogenen aktivierten Zustand in den nicht-aktivierten Zustand die Adsorption von Wasserstoff unterstützt, sozusagen entsprechend einer Wirkung eines Schwamms.

## Revendications

1. Dispositif pour l'adsorption et/ou la désorption d'hydrogène réversible à la fois physique et chimique, comprenant un matériau ayant un pouvoir adsorbant envers l'hydrogène, dans lequel ledit matériau organique ou inorganique est disposé sur un substrat de matériau à mémoire de forme dont la variation de phase est utilisée pour favoriser l'adsorption d'hydrogène,
**caractérisé en ce que** ledit dispositif comprend un moyen destiné à produire une variation de phase dans le matériau à mémoire de forme d'une condition non activée à une condition activée contractée, de telle manière que la variation du matériau à mémoire de forme de la condition non activée à la condition activée contractée participe à la désorption d'hydrogène et la variation du matériau à mémoire de forme de la condition activée contractée à la condition non activée participe à l'adsorption d'hydrogène, selon une sorte d'effet d'éponge.

2. Dispositif selon la revendication 1, **caractérisé en ce que** le substrat du matériau à mémoire de forme est formé en tant que barre cylindrique recouverte d'un revêtement comprenant le matériau mentionné ci-dessus ayant un pouvoir adsorbant.

3. Dispositif selon la revendication 1, **caractérisé en ce que** le matériau adsorbant est choisi parmi :
les matériaux carbonés (par exemple les nanotubes en carbone, les nanofibres en carbone), les métaux (par exemple Li, Na, K, Mg ou autres métaux alcalins ou alcalino-terreux de type alanate, Ti, Pd), les alliages de métaux (par exemple NiTi, LaNi₅, FeTi, MgNi, LiB, MOF - structures organométalliques), ou d'autres matériaux ayant un pouvoir adsorbant et les combinaisons ou les hybrides de ceux-ci.

4. Dispositif selon la revendication 1, **caractérisé en ce que** le matériau adsorbant est une petite molécule ou un hybride polymère ou organométallique, un matériau organique ou inorganique.

5. Dispositif selon la revendication 1, **caractérisé en ce que** le matériau adsorbant dans le cas des hybrides organométalliques (PDMH) est choisi parmi :
les polymères, par exemple : les poly(anilines), le poly(tétrafluoroéthylène), un poly(amide), une poly(éther cétone), le poly(propylène), le poly(vinylidène), le poly(éthylène), le poly(chlorure de vinyle), un poly(imide), pour la portion organique ;
les métaux adsorbants sont ceux mentionnés dans la revendication 3.

6. Dispositif selon la revendication 1, **caractérisé en ce que** le matériau à mémoire de forme est choisi parmi :
des alliages à mémoire de forme :
- les alliages à base de Ni, par exemple : Ni-Ti, Ni-Ti-Cu, Ni-Ti-Fe, Ni-Ti-Cr, Ni-Al;
- les alliages à base de Cu, par exemple : Cu-Al-Ni, Cu-Zn-X (X = Si, Sn, Al), Cu-Zn, Cu-Sn ;
- les alliages magnétiques, par exemple : Ni-Mn-Ga ;
- les alliages à haute température, par exemple : Ni-Ti-Hf ;
- d'autres alliages, par exemple : Fe-Pt, Fe-Mn-Si, Mn-Cu, In-Ti, Ag-Cd, Au-Cd,
ou tout autre alliage ayant une composition élémentaire différente et avec une transformation martensitique thermoplastique réversible ;
les polymères électrorestrictifs et/ou électrorestricteurs, par exemple :
- les silicones, les fluorosilicones,
- les polymères acryliques,
- le PVDF (poly(fluorure de vinylidène)), le TrFe, le HFP,
- les polymères à mémoire de forme, par exemple : le poly(uréthane) ;
les polymères électromécaniquement conducteurs, par exemple : la poly(aniline) ;
les matériaux piézoélectriques :
- les matériaux céramiques, par exemple : le PZT
- les matériaux monocristallins, par exemple : le PZN, le PT,
- les polymères, par exemple : le PVDF
les matériaux magnétorestrictifs.

7. Dispositif selon la revendication 2, **caractérisé en ce que** le revêtement du matériau adsorbant est formé à son tour avec une couche de métal noble ayant à la fois des fonctions de dissociation catalytique d'hydrogène et de stockage, ou avec une couche de matériau métallique ou polymère agissant en tant que membrane poreuse, visant à assurer une meilleure régulation de la cinétique d'adsorption/désorption et également à contenir le matériau adsorbant, éliminant ainsi le risque de son retrait du support à mémoire de forme.

8. Dispositif selon la revendication 1, **caractérisé en ce que** le matériau ayant un pouvoir adsorbant est disposé sous forme nanométrique sur des microparticules à mémoire de forme, de préférence recouvert d'une couche de palladium ou d'un autre métal noble ayant une fonction protectrice et catalytique.

9. Dispositif selon la revendication 1, **caractérisé en ce qu'**il comprend une pile de plaques constituées de matériau à mémoire de forme alterné avec des couches de matériau adsorbant et immergé dans une matrice polymère déformable régulant la cinétique d' adsorption/désorption.

10. Dispositif selon la revendication 1, **caractérisé en ce qu'**il comprend une pluralité de filets de matériaux à mémoire de forme immergée dans le matériau adsorbant et agencés en diverses directions, et si nécessaire une matrice polymère déformable régulant la cinétique d'adsorption/désorption.

11. Procédé pour l'adsorption et/ou la désorption d'hydrogène, comprenant l'étape consistant à préparer un matériau ayant un pouvoir adsorbant envers l'hydrogène, dans lequel ledit matériau est disposé sur un substrat de matériau à mémoire de forme dont la variation de phase est utilisée pour favoriser l'adsorption d'hydrogène,
**caractérisé en ce qu'**une variation de phase dans le matériau à mémoire de forme est produite, d'une condition non activée à une condition activée contractée, de telle manière que la variation du matériau à mémoire de forme de la condition non activée à la condition activée contractée favorise la désorption d'hydrogène et la variation du matériau à mémoire de forme de la condition activée contractée à la condition non activée favorise l'adsorption d'hydrogène, selon une sorte d'effet d'éponge.
